# EUROPEAN PATENT APPLICATION

(11) **EP 2 650 800 A1**
(43) Date of publication of application: **16.10.2013**
(21) Application number: 12164146.8
(22) Date of filing: 13.04.2012
(51) Int. Cl.: G06F 17/30, G06F 17/27, H04L 29/06, H04L 29/08, H04W 4/00, H04W 4/20, H04W 12/02

(54) **Method and device for controlling access of users to physical objects belonging to other users through social networks**

(71) Applicant: Alcatel Lucent, 75007 Paris (FR)
(72) Inventor: Beauvais, Mathieu, 91620 NOZAY (FR); Pastor, Alain, 91620 NOZAY (FR); Stan, Johann, 92220 BAGNEUX (FR)
(74) Representative: Camus, Olivier Jean-Claude

(57) **Abstract**

A control device (2) equips a communication equipment (1) that belongs to a first user to which belong physical objects associated to attribute(s) and/or function(s). This control device (2) comprises a control means (3) arranged, when its communication equipment (1) receives a message from a second user that requests an attribute and/or a function associated to a physical object of this first user to which is associated a privacy policy defining levels of information to which other users are allowed to access depending on values of at least one chosen parameter, for providing the second user with information defining the requested attribute and/or function at the level which depends on his associated value.

## Description

### Technical field

The present invention relates to control access to attributes and/or functions (or services) that are associated to physical objects owned by users of communication equipments belonging to social networks.

### Background of the invention

It has been recently proposed to associate physical objects to users of communication equipments belonging to communities into social networks, in order they could share their physical objects at least partly with other users belonging to their community to quickly increase their mutual knowledge and ease information sharing. But dissemination and exploitation of physical objects introduce an important issue in terms of owner privacy, notably in some environments such as the so-called "Environment as a service" (or Eaas).

As it is known by the man skilled in the art, it is possible to control access to owner objects (and notably Eaas objects) by making their attributes visible, accessible, not accessible or hidden depending on user profiles and/or geographical proximity between users and physical objects. Such an approach allows an object owner to define a kind of privacy policy for his objects, but this privacy policy only allows a user to be either authorized or unauthorized to access to an object attribute or function, which is not flexible.

### Summary of the invention

So, an objective of the invention is to introduce some flexibility into control access of physical objects of users.

More precisely, the invention provides a method, intended for controlling access to physical objects belonging to users of communication equipments and associated to attribute(s) and/or function(s), and comprising the steps of:
(i) associating a privacy policy defining levels of information, relative to at least one physical object, to which other users are allowed to access depending on values of at least one chosen parameter, and
(ii) when one of these other users requests an attribute and/or a function associated to this physical object, providing this requesting user with information that defines the requested attribute and/or function at a level which depends on the value that is associated to this requesting user.

Such a solution allows an object owner to make the object's attributes and functions (or services) visible in a "blurry" way and in an auto-adaptive manner.

The method according to the invention may include additional characteristics considered separately or combined, and notably:
- in step (i) each parameter may be chosen from a group comprising at least a social proximity, a choice of a user to disclose or not a specific attribute or function, a strategy of privacy management depending on the usage declared by the requesting user, a physical proximity to the requested object, and the level of expertise of the requesting user;
- in step (ii) one may first check if the requesting user is authorized to access to the requested object, before providing the level of information;
- in step (ii) one may analyse the requested attribute or function to deduce a semantic concept belonging to an ontology, then one may compute paths to a root of this ontology, then one may select a path comprising this deduced semantic concept from these computed paths, then one may determine the level of information to be provided into this selected path while starting from the deduced semantic concept;
- in step (ii), in case where a user requests a current value or description of an object attribute or function, one may replace this requested current value or description with the information defining the object attribute or function at the level which depends on the value associated to the requesting user.

The invention also provides a computer program product comprising computer executable instructions adapted to perform a method such as the one above introduced.

The invention also provides a control device, intended for equipping a communication equipment belonging to a first user to which belong physical objects associated to attribute(s) and/or function(s), and comprising a control means arranged, when its communication equipment receives a message from a second user that requests an attribute and/or a function associated to a physical object of the first user to which is associated a privacy policy defining levels of information to which other users are allowed to access depending on values of at least one chosen parameter, for providing this second user with information defining the requested attribute and/or function at the level which depends on the value associated to this requesting user.

Such a control device may further comprise an association means arranged for allowing the first user to associate the privacy policies to physical objects that belong to him.

The invention also provides a communication equipment comprising a control device such as the one above introduced. This communication equipment may be chosen from a group comprising at least a smartphone, an electronic tablet, a video game console, a laptop and a computer.

### Brief description of the figures

Other features and advantages of the invention will become apparent on examining the detailed specifications hereafter and the appended drawings, wherein:
- figure 1 schematically and functionally illustrates an example of communication device comprising a control device according to the invention,
- figure 2 schematically illustrates a first example of concept graph, and
- figure 3 schematically illustrates a second example of concept graph.

### Detailed description of the preferred embodiment

The appended drawings may serve not only to complete the invention, but also to contribute to its understanding, if need be.

The invention aims, notably, at offering a control method, and an associated control device 2, intended for controlling access of users to physical objects belonging to other users through communication equipments 1.

In the following description it will be considered that the communication equipments 1 are smartphones. But the invention is not limited to this type of communication equipment. Indeed it concerns any type of electronic equipment comprising a communication module that may be connected to at least one communication network, whatever the type (i.e. wired or wireless), and notably electronic tablets, video game consoles, laptops, television sets and computers.

The control method according to the invention is intended for controlling access to physical objects that belong to users of communication equipments 1 and that are associated to one or more attributes and/or one or more functions (or services).

A physical object is a real life object owned by a user, such as a television set or a weather station. An OCSN ("Object Centered Social Network") is a software representation of relationships between users and between users and physical objects. Such a representation can be built from information collected into social networks to which belong the considered users.

This control method comprises first (i) and second (ii) steps.

The first step (i) consists in associating a privacy policy that defines levels of information relative to at least one physical object belonging to a user and to which other users are allowed to access depending on values of at least one chosen parameter.

In other words, one may associate several information levels to one or more physical objects belonging to the same user of a communication equipment 1, then one may associate these different levels of information to different parameter values, then one may associate these different parameter values to different users or groups of users. For instance the lower level associated to a physical object offers the more complete information, the upper level associated to the same physical object offers the less complete information, and possible intermediate levels offer information with a completeness comprised between the ones of the lower and upper levels.

Each intermediate level and the upper level may be considered as a blur level (i.e. a level corresponding to a "blurred" or less complete information) compared to its preceding level.

The associations may be carried out by the user of a communication equipment 1 when the latter (1) is equipped with a control device 2 which comprises an association means 4. Such an association means 4 may be coupled to the human machine interface of the communication equipment 1 in order to allow the user to associate privacy policies to (physical) objects that belong to him, for instance through dedicated menus to be selected and/or dedicated fields to be fulfilled.

The privacy policies associated to the physical objects may be stored into a memory means 5 of the control device 2.

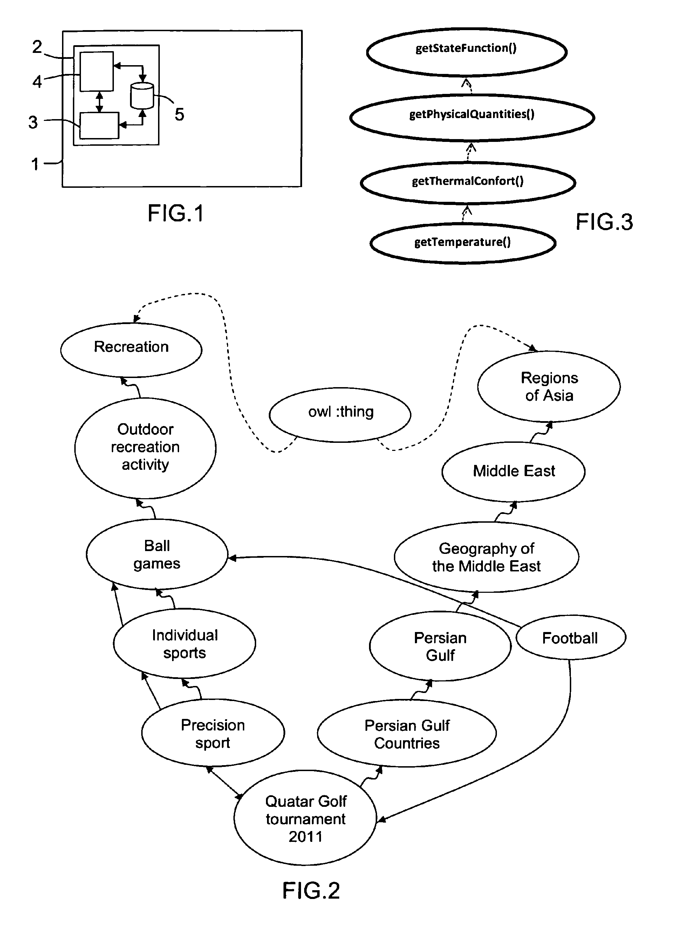

Two different groups of information relative to the same value of an object attribute are illustrated in the concept graph (or tree) of figure 2. In this first example the object attribute refers to a television program that is displayed on the screen of a user smartphone 1. This television program is the 2011 Qatar golf tournament. So, the current value of the physical object attribute is "Qatar Golf Tournament 2011 ", and this value is the more complete available information, which means that it corresponds to the lower information level.

The first (or left) group of values comprises a first value "Qatar Golf Tournament 2011 " (belonging to the lower level), a first intermediate value "Precision Sport" (less complete than the first value and belonging to a first intermediate (or blurred) level), a second intermediate value "Individual Sport" (less complete than the first intermediate value and belonging to a second intermediate (or blurred) level), a third intermediate value "Ball Games" (less complete than the second intermediate value and belonging to a third intermediate (or blurred) level), a fourth intermediate value "Outdoor Recreation Activity" (less complete than the third intermediate value and belonging to a fourth intermediate (or blurred) level), and a last value "Recreation" (less complete than the fourth intermediate value and belonging to the upper level (the most blurred)).

The second (or right) group of values comprises a first value "Qatar Golf Tournament 2011 " (belonging to the lower level), a first intermediate value "Persian Gulf Countries" (less complete than the first value and belonging to a first intermediate (or blurred) level), a second intermediate value "Persian Gulf" (less complete than the first intermediate value and belonging to a second intermediate (or blurred) level), a third intermediate value "Geography of the Middle East" (less complete than the second intermediate value and belonging to a third intermediate (or blurred) level), a fourth intermediate value "Middle East" (less complete than the third intermediate value and belonging to a fourth intermediate (or blurred) level), and a last value "Regions of Asia" (less complete than the fourth intermediate value and belonging to the upper level (the most blurred)).

Another example of group of information is illustrated in the concept graph of figure 3. In this second example an object function (or service) is intended for retrieving the temperature of an Eaas object (e.g. a given location). In this example the group comprises a first function "getTemperature()", which is capable of retrieving the exact value of the temperature (for instance -10°C or +24°C), and which belongs to the lower level, a first intermediate function "getThermalComfort()", which associates to each temperature value a corresponding string label (for instance +25 °C → warm or +3°C → cold, or else -10°C → very cold), a second intermediate function "getPhysicalQuantities()" allows to get the corresponding physical quantity that is being measured by this group of functions, and a last function "getStateFunction()" retrieves the physical quantity to be measured (for instance temperature, pressure, luminosity, or humidity).

Preferably the user does not provide the information corresponding to the information levels he wants to associate to at least one of his objects. He preferably provides only the number of information levels, which must be at least equal to two. So, this is the association means 4 that is preferably in charge of determining the information that must be associated to each information level.

The second step (ii) is implemented each time a user requests an attribute and/or a function associated to an object of another user to the communication equipment 1 of this last user. It consists in providing the requesting user with an information that defines the requested attribute and/or function at the level which depends on the value that is associated to this requesting user.

This second step (ii) may be carried out by a control module 3 of a control device 2 equipping an user communication equipment 1.

It is important to note that in step (ii) the control device 2 preferably checks if the requesting user is authorized to access to the requested object, before determining the level of information and therefore before providing the determined level of information.

It is also important to note that one or more parameters may be used during the first step (i). For instance, each parameter may be chosen from a group comprising at least a social proximity, a choice of a user to disclose or not a specific attribute or function (or service) associated to an object belonging to him, a strategy of privacy management depending on the usage declared by the requesting user, a physical proximity to the requested object, and the level of expertise of the requesting user.

The social proximity (or closeness) between user X and user Y is computed during the second step (ii), once the requesting user Y is known. It may be a value comprised between 0 and 1. For instance, if user X and user Y have already discussed a lot in the past about objects, user X will be likely to disclose more complete (or accurate) values of a requested object belonging to him. Examples of closeness or social proximity computations can be found in the document "Developing Compelling Social-Enabled Applications with Context-based Social Interaction Analysis", ASONAM 2009, for instance.

For instance, if user Y is an important contributor to an OCSN (i.e. if he has many discussions with many other users or has a lot influence in a social community), he may access to more complete or accurate values of Eaas attributes related to the subject(s) of this OCSN than for other object attributes.

The user may choose to disclose or not a specific object attribute or function and the maximal (or minimal) level of information (or blur) for a given object attribute or function. For instance these choices may be carried out by means of minus (-) or plus (+) buttons of the human man interface of a communication equipment 1.

The usage strategies may be proposed to a user by the control device 2 equipping his communication equipment 1 in order to ease the selection or to automatically choose the maximal (or minimal) level of information (or blur) for each object attribute or function. For instance, the control device 2 may provide several strategies of privacy management depending on the usage of the requested object by the requesting user. A first strategy may consist in showing all the object attributes or functions, declared public by a user, to everyone. A second strategy may consist in showing all the object attributes or functions relevant to the considered OCSN only with the more complete or accurate values or descriptions. A third strategy may consist in modifying object attributes or functions relevant to the considered OCSN only with lightly blurred values. A fourth strategy may consist in modifying object attributes or functions relevant to the considered OCSN only with heavily blurred values.

The semantic proximity between OCSN subject related concepts and a concept graph or tree related to an object attribute or function is computed during the second step (ii), once this requested object attribute or function is known. For instance, in the first example illustrated in figure 2 a semantic match between the golf program and the semantic concept "Football" is found at "Ball Games" level and enables a maximal (or minimal) level of information (or blur) that starts from the Ball Games concept. So, a light blur level could correspond to Ball Games while a heavier blur level could correspond to "Outdoor Recreation Activity" or even to "Recreation".

The level of expertise of the user who requests access to an (Eaas) object is computed during the second step (ii), once this requested object is known. For instance, the completeness of information may depend on the level of expertise of the requesting user in the area that corresponds to the requested object attribute or function. Thus, a user who is expert in golf may have access to a more complete information than a user who has never talked about golf before. A statistical analysis may be performed not for a user to be recommended to contact an expert but for an expert to be able to access to a less blurred information. The expertise notion may be based on the number of messages posted by the requesting user in the field to which belongs the requested object.

In step (ii) the requested attribute or function may be recognized by the control means 3 through a semantic analysis. For instance, the control means 3 may analyse the requested attribute or function to deduce a semantic concept that belongs to an ontology. This semantic concept discovery can be achieved in the following way. First, one may identify the keywords and named entities in a given object description contained into a request by eliminating stop-words and using state-of-the art keyword/entity extraction algorithms (for instance Alchemy API). The first thing to do is to search for candidate concepts related to the keywords Alchemy found. For a keyword there is generally several candidate concepts in a repository or database, however there is also several ways to obtain a list of candidate concepts.

A first way may consist in using a service such as dbpedia lookup (accessible at "http://wiki.dbpedia.org/Lookup"). A second way may consist in using the dbpedia disambiguation property (if a concept is ambiguous, the disambiguation property "dbpedia-owl:wikiPageDisambiguates" (accessible at "http://dbpedia.org/ontology/wikiPageDisambiguates") provides its disambiguate concepts).

The core of the semantic concept discovery algorithm may use a cosine similarity (a common information retrieval similarity measure computes the similarity between each candidate concept and the given entity to be disambiguated in order to find the most relevant ones). To do that, the concept and the function description (or attribute) may be represented by means of vectors, which can be compared by measuring the angle between them.

Then the control means 3 may compute paths to the root of the ontology, and may select a path which comprises the deduced semantic concept from these computed paths. These computed paths may define together a concept graph (or tree or chain), such as the ones illustrated in figures 2 and 3. Moreover, these paths may be computed from information belonging to different OCSNs (to which belong both the requesting user and the owner of the requested object) and associated to social proximity values or rates.

In the first example illustrated in figure 2, one may identify the OCSN concerned by "Ball Games" as a source social proximity to define the level of blur. The main question in this first example is: if two users A and B talk about "Ball Games" in an OCSN, what would be the right level of information provided by the control device 2 of the communication equipment 1 of user A to user B from the set of candidate concepts in the hierarchy. So, the system will have to choose between the most precise concept "Ball games" and the least precise concept "Recreation" depending on the "Ball games" social proximity between user A and user B.

In the second example illustrated in figure 3, one may identify the OCSN concerned by "installing building insulation" as a source social proximity to define the level of blur. In this second example User A and user B discuss about "building insulation". So, depending on social proximity between these two users A and B about "building insulation" concept, user B will have access to some of, or all the, user A thermometer functions.

To choose the right concept branch and the right level of blur for a given user or a given discussion in an OCSN, one may perform the following actions. In the case where two function descriptions are concerned, one may compute the path of each semantic concept to the root of the knowledge base ("owl:Thing"). This root concept of all the other concepts will not be part of the displayed attribute value as it is too general.

The function description for which the average path is longer, can be considered as less precise (or complete). In case of output values, one may compute the semantic distance (e.g. the number of edges in the knowledge base) between each term in the hierarchy and the given criteria. The closest term can be considered as the starting level of blur. The system will never display a more precise concept than this starting level. For instance, "Ball games" is the closest term and "individual sport" will never be disclosed.

In the first example illustrated in figure 2, if the OCSN's main discussion topic is "Football", in the semantic graph associated to the topic of the television channel a second level of blur will be achieved, showing also Ball Games, as this is the closest common concept between the two in the linked data graph. The computation of paths between concepts may be achieved by means of specific SPARQL queries that attempt to find links between concepts. When several links exist between each concept one may consider the minimal path. The concept which is the closest from the topic of an OCSN can be considered as a winner concept. However, there might be a situation where several candidate concepts exist, given that paths may have similar length. In this special situation, one may compare the description of concepts in order to choose the most similar, for instance by using natural language processing analysis on the abstract of the concept.

Similarly, in the second example illustrated in figure 3, a given function can be selected according to the topic of discussion ("Thermal Insulation") in an OCSN. In this case, the most relevant level of blur of a function is the retrieval of the exact temperature value itself. The concept "Thermal Insulation" is the most relevant to the function "getTermperature". Depending on the selected strategy, a user from the Thermal Insulation OSCN could access functions starting at the getTemperature level of blur (i.e. the most precise or complete function). So, a user from an OCSN concerned by "Thermal Protection" could only access to function "getThermalConfort()" or to blurrier functions because the Thermal Protection concept is an abstraction of the Thermal Insulation concept.

Finally the control means 3 may determine the level of information to be provided into the selected path while starting from the deduced semantic concept, which is considered as the more complete available information. Once this determination is done, the current value or description associated to the requested object attribute or function may be replaced with the information defining this object attribute or function at the level which depends on the value associated to the requesting user. In fact, a "downstream" bluring mechanism can be performed by the control means 3 for bluring the current object value, or an "upstream" bluring mechanism can be performed by the control means 3 for changing the current function by another function.

In the first example illustrated in figure 2, where user A is watching the 2011 Qatar golf tournament with its communication equipment 1, if a user B which is not well known by user A uses one virtual extension of user A communication equipment 1 to know which program user A is currently looking at, the downstream bluring mechanism will authorized user B to get only a blurred information: a Precision Sport program (first level of blur), or a Ball Games program (second level of blur), or else an Outdoor Recreation program (third level of blur).

In the second example illustrated in figure 3, if a user B which is not well known by user A uses the virtual function indoor weather channel of user A communication equipment 1, the downstream bluring mechanism will authorized user B to get only a blurred information: for instance between 20°C and 30°C (first level of blur) or icy, cold, good, warm or hot (second level of blur). The function is not changed but the output value of the function is more abstract.

In the second example illustrated in figure 3, the upstream bluring mechanism will choose a function which ouputs less precise (or complete) values. If a user B, which is well known by user A, uses the virtual function indoor weather channel of user A communication equipment 1, he will be authorized to get the outputs of two functions: getTemperature() (offering an output in °C) which is the most precise or complete function about temperature, and getThermalConfort() (icy, cold, good, warm, or hot) which is a less precise (or complete) function about temperature. Now, if a user B, which is not well known by user A, uses the virtual function indoor weather channel of user A communication equipment 1, he will be authorized to get access to getThermalConfort() function instead of getTemperature(). So, the output value of the requested function is not blurred but the presentation or description of the requested function is modified.

It is important to note that a control device 2 can be made of software modules, at least partly, or of electronic circuit(s) or hardware modules, or else of a combination of hardware and software modules (in this last case the control device 2 comprises also software interfaces allowing interworking between its hardware and software modules). In case where it is made of software modules it can be stored in a memory means or in any computer software product which can be read by a communication equipment 1.

The invention can be considered as a building block of an (Eaas) object which provides a fine-grained access control of the objects values (or states).

The invention is not limited to the embodiments of control method, control device and communication equipment described above, only as examples, but it encompasses all alternative embodiments which may be considered by one skilled in the art within the scope of the claims hereafter.

## Claims

1. Method for controlling access to physical objects belonging to users of communication equipments (1) and associated to attribute(s) and/or function(s), **characterized in that** it comprises the steps of: (i) associating a privacy policy defining levels of information, relative to at least one physical object, to which other users are allowed to access depending on values of at least one chosen parameter, and (ii) when one of said other users requests an attribute and/or a function associated to said physical object, providing said requesting user with information defining said requested attribute and/or function at the level which depends on the value associated to this requesting user.

2. Method according to claim 1, **characterized in that** in step (i) each parameter is chosen from a group comprising at least a social proximity, a choice of a user to disclose or not a specific attribute or function, a strategy of privacy management depending on the usage declared by the requesting user, a physical proximity to the requested object, and the level of expertise of the requesting user.

3. Method according to one of claims 1 and 2, **characterized in that** in step (ii) one first checks if the requesting user is authorized to access to the requested object, before providing the level of information.

4. Method according to one of claims 1 to 3, **characterized in that** in step (ii) one analyses said requested attribute or function to deduce a semantic concept belonging to an ontology, then one computes paths to a root of said ontology, then one selects a path comprising said deduced semantic concept from said computed paths, then one determines the level of information to be provided into said selected path while starting from said deduced semantic concept.

5. Method according to one of claims 1 to 4, **characterized in that** in step (ii), in case where a user requests a current value or description of an object attribute or function, one replaces said requested current value or description with the information defining said object attribute or function at the level depending on the value associated to said requesting user.

6. Control device (2) for a communication equipment (1) belonging to a first user to which belong physical objects associated to attribute(s) and/or function(s), **characterized in that** it comprises a control means (3) arranged, when said communication equipment (1) receives a message from a second user that requests an attribute and/or a function associated to a physical object of said first user to which is associated a privacy policy defining levels of information to which other users are allowed to access depending on values of at least one chosen parameter, for providing said second user with information defining said requested attribute and/or function at the level which depends on the value associated to this requesting user.

7. Control device according to claim 6, **characterized in that** it comprises an association means (4) arranged for allowing said first user to associate said privacy policies to physical objects belonging to him.

8. Communication equipment (1), **characterized in that** it comprises a control device (2) according to one of claims 6 and 7.

9. Communication equipment according to claim 8, **characterized in that** it is chosen from a group comprising at least a smartphone, an electronic tablet, a video game console, a laptop and a computer.

10. Computer program product comprising computer executable instructions adapted to perform the method according to one of claims 1 to 5.
